# EUROPÄISCHE PATENTANMELDUNG

(11) **EP 4 252 934 A1**
(43) Veröffentlichungstag der Anmeldung: **04.10.2023**
(21) Anmeldenummer: 22164713.4
(22) Anmeldetag: 28.03.2022
(51) Int. Cl.: B21J 15/02, B21J 15/12, B21J 15/32, B23P 19/06

(54) **VORRICHTUNG ZUM AUFFÄDELN EINER WERKZEUGEINHEIT AUF EIN LÄNGLICHES BAUELEMENT**

(71) Anmelder: Airbus Operations GmbH, 21129 Hamburg (DE)
(72) Erfinder: BORRMANN, Christof, 21129 Hamburg (DE)

(57) **Zusammenfassung**

Es wird eine Vorrichtung zum Auffädeln einer Werkzeugeinheit auf ein längliches Bauelement vorgeschlagen, die Vorrichtung aufweisend eine Halteanordnung zum Haltern der Vorrichtung an einer Vorschubeinrichtung, eine Werkzeugeinheit, die auf das längliche Bauelement aufzufädeln ist und eine Werkzeugachse aufweist, eine mit der Werkzeugeinheit verbundene Vibrationseinheit, die dazu ausgebildet ist, eine periodische Kraft in zumindest einer zu der Werkzeugachse quer verlaufenden ersten Raumrichtung zu generieren, und eine elastische Kupplungseinheit mit einer ersten Kupplungskomponente und einer zweiten Kupplungskomponente, die elastisch aneinander gehalten werden, wobei die erste Kupplungskomponente mit der Halteanordnung verbunden ist, wobei die zweite Kupplungskomponente mit der Werkzeugeinheit verbunden ist, und wobei die Vorrichtung dazu ausgebildet ist, durch Betreiben der Vibrationseinheit während eines Vorschubs der Halteanordnung zum Auffädeln der Werkzeugeinheit auf das längliche Bauelement einer auf die Werkzeugeinheit wirkenden Vorschubkraft einen zusätzlichen, sich periodisch ändernden Queranteil hinzuzufügen, durch den einem Verkanten der Werkzeugeinheit an dem länglichen Bauelement entgegengewirkt wird.

## Beschreibung

### Technisches Gebiet

Die vorliegende Beschreibung betrifft eine Vorrichtung und ein Verfahren zum Auffädeln einer Werkzeugeinheit auf ein längliches Bauelement.

### Technischer Hintergrund

Zum Verbinden von Schalenelementen im Flugzeugbau werden hauptsächlich Nietelemente verwendet, welche zu einfachen, prüffähigen und zuverlässigen Verbindungen führen. Die zu verbindenden Schalenelemente werden dazu gemeinsam gebohrt und in die durchgehende Bohrung wird anschließend manuell oder maschinell von außen ein Niet gesteckt. Dieser ragt dann auf der Schaleninnenseite heraus. Nach Aufbringen eines Schließrings auf das herausstehende Ende wird dieser mittels eines manuellen Nietwerkzeugs mit dem Niet verquetscht. Das Nietwerkzeug muss hierzu vollständig auf den Niet aufgefädelt werden.

Um den Vorgang des Nietquetschens zu automatisieren ist es üblich, mit Hilfe einer Vorrichtung eine Auffädelbewegung des Nietwerkzeugs auf den Niet automatisch durchzuführen. Da sowohl das Einbringen der gemeinsamen Bohrung als auch das Einstecken des Niets mit Toleranzen behaftet ist, verwenden bekannte automatisierte Lösungen komplexe Mess- und Steuerungsabläufe, welche ein automatisches Auffädeln gewährleisten können. Dazu werden Sensoren genutzt, die Positions- und Winkelabweichungen erfassen können, um eine exakte Ausrichtung zwischen der Werkzeugachse und der Nietachse sicherzustellen. Dies ist mit einer komplexen Steuerung, hohen Investitionskosten und erhöhten Prozesszeiten verbunden. Bei der nicht korrekten Ausrichtung des Nietwerkzeugs gegenüber dem Niet könnte es zum Verkanten und zur Beschädigung des Niets und/oder der zu verbindenden Bauteile kommen.

### Beschreibung

Es kann als Aufgabe betrachtet werden, eine Vorrichtung zum Auffädeln eines Werkzeugs auf ein längliches Bauelement vorzuschlagen, das einfach, zuverlässig und kostengünstig einsetzbar ist.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird eine Vorrichtung zum Auffädeln einer Werkzeugeinheit auf ein längliches Bauelement vorgeschlagen, die Vorrichtung aufweisend eine Halteanordnung zum Haltern der Vorrichtung an einer Vorschubeinrichtung, eine Werkzeugeinheit, die auf das längliche Bauelement aufzufädeln ist und eine Werkzeugachse aufweist, eine mit der Werkzeugeinheit verbundene Vibrationseinheit, die dazu ausgebildet ist, eine periodische Kraft in zumindest einer zu der Werkzeugachse quer verlaufenden ersten Raumrichtung zu generieren, und eine elastische Kupplungseinheit mit einer ersten Kupplungskomponente und einer zweiten Kupplungskomponente, die elastisch aneinander gehalten werden, wobei die erste Kupplungskomponente mit der Halteanordnung verbunden ist, wobei die zweite Kupplungskomponente mit der Werkzeugeinheit verbunden ist, und wobei die Vorrichtung dazu ausgebildet ist, durch Betreiben der Vibrationseinheit während eines Vorschubs der Halteanordnung zum Auffädeln der Werkzeugeinheit auf das längliche Bauelement einer auf die Werkzeugeinheit wirkenden Vorschubkraft einen zusätzlichen, sich periodisch ändernden Queranteil hinzuzufügen, durch den einem Verkanten der Werkzeugeinheit an dem länglichen Bauelement entgegengewirkt wird.

Die Werkzeugeinheit, welche auf das längliche Bauelement aufzufädeln ist, wird auf der Halteanordnung angebracht. Die Halteanordnung kann mit einer Vorschubeinrichtung verbunden sein, welche die Werkzeugeinheit in Richtung des länglichen Bauelements verschiebt. Die Vorschubeinrichtung könnte an einem Bauplatz zur Bearbeitung eines Rumpfs oder anderer Bauteile an einem Gerüst verschieb- oder versetzbar befestigt sein, um nacheinander mehrere Positionen mit länglichen Bauelementen anfahren zu können.

Die Halteanordnung könnte in einer Ausführungsform als Rahmen oder Gehäuse ausgeführt und dazu ausgebildet sein, die Werkzeugeinheit und die Vibrationseinheit an der Kupplungseinheit zu halten. Die Kupplungseinheit könnte weiterhin auch direkt an der Vorschubeinrichtung angeordnet sein, sodass die Halteanordnung in diesem Fall lediglich eine Schnittstelle zwischen der Vorschubeinrichtung und der Kupplungseinheit bildet und durch ein oder mehrere Befestigungsmittel ausgebildet sein könnte.

Die Werkzeugeinheit könnte ein Nietwerkzeug sein und einen Bearbeitungskopf aufweisen, der auf das Bauelement aufzufädeln ist. Die Werkzeugachse der Werkzeugeinheit fällt im Idealfall mit der Erstreckungsachse des länglichen Bauelements zusammen. Wie eingangs erwähnt kann dies im Stand der Technik durch ein aufwändiges Ausrichten der Werkzeugeinheit erreicht werden. Erfindungsgemäß wird jedoch stattdessen durch die Vibrationseinheit eine sich periodisch ändernde Ausrichtung der Werkzeugeinheit während des Vorschiebens der Werkzeugeinheit erzwungen, durch die eine Verkantung mit dem länglichen Bauelement verhindert wird. Hierzu ist die Werkzeugeinheit nicht starr, sondern über die elastische Kupplungseinheit flexibel mit der Halteanordnung verbunden.

Aufgrund einer elastischen Verbindung zwischen den beiden Kupplungskomponenten können sich diese gegeneinander bewegen, wenn die Werkzeugeinheit auf das längliche Bauelement aufgefädelt wird. Die Bewegbarkeit der elastischen Kupplungseinheit ist dabei bevorzugt derart gewählt, dass die Werkzeugeinheit strukturell stets in der Lage ist, die Werkzeugachse fluchtend mit der Erstreckungsachse des länglichen Bauelements auszurichten. Die Lagetoleranzen der Werkzeugachse sind folglich größer als die Lagetoleranzen des länglichen Bauelements.

Eine tatsächliche, gezielte Ausrichtung der Werkzeugeinheit in eine einzelne, präzise bestimmte Position wird jedoch nicht erzwungen. Stattdessen wird über die Vibrationseinheit eine periodische Kraft quer zu der Werkzeugachse generiert, sodass die Werkzeugeinheit stets in einem gewissen Maße der Querkraft folgt und hierbei die elastische Kupplungseinheit elastisch verformt. Die Werkzeugeinheit pendelt folglich um eine Neutrallage herum, sodass die Werkzeugachse um die Erstreckungsachse des Bauelements herum schwingt, während die Werkzeugeinheit durch die Vorschubeinrichtung weiter auf das Bauelement geschoben wird. Befindet sich die Werkzeugeinheit etwa anfänglich schräg auf dem länglichen Bauelement, würde bei einem rein translatorischen Vorschub eine Verkantung zwischen dem Bauelement und der Werkzeugeinheit erfolgen. Da durch die Vibrationseinheit jedoch eine leichte, periodische Pendelbewegung quer zu der Werkzeugachse durchgeführt wird, kann eine sich im Entstehen befindliche Verkantung durch Änderung der Ausrichtung unmittelbar immer wieder gelöst werden.

In einer vorteilhaften Ausführungsform weist die Vibrationseinheit einen Elektromotor mit einer exzentrischen Masse auf. Der Elektromotor kann eine Welle aufweisen, an der die exzentrische Masse angeordnet ist. Die Welle kann auch an zwei einander entgegengesetzten Stirnseiten des Elektromotors mit jeweils einer exzentrischen Masse ausgestattet sein. Die Größe und Exzentrizität der Masse bestimmt die von der Vibrationseinheit generierte Querkraft, während die Drehzahl des Elektromotors die Frequenz der periodischen Querkraft bestimmt.

In einer alternativen Ausführungsform kann die Vibrationseinheit auch pneumatisch ausgebildet sein. Die Vibrationseinheit könnte dann etwa gleichzeitig mit einer pneumatischen Werkzeugeinheit mit Pressluft versorgt werden.

In einer vorteilhaften Ausführungsform ist die elastische Kupplungseinheit dazu ausgebildet, einen Versatz der beiden Kupplungskomponenten zumindest in einer Ebene durchzuführen. Die beiden Kupplungskomponenten könnten sich hierzu etwa stets parallel zueinander bewegen, jedoch seitlich und in Vorschubrichtung bewegbar sein. Dabei ist denkbar, dass die beiden Kupplungshälften auch eine Verdrehung zueinander zulassen. Die Werkzeugachse könnte dann zumindest in einer Raumrichtung hin- und herpendeln.

In einer vorteilhaften Ausführungsform ist die elastische Kupplungseinheit dazu ausgebildet, die beiden Kupplungskomponenten gegeneinander zu verdrehen. Eine Verdrehung könnte, wie vorangehend erwähnt, in zumindest einer Raumrichtung möglich sein, wenn beide Kupplungskomponenten parallel zueinander bleiben. Allerdings ist auch denkbar, eine Verdrehung oder Verkippung um weitere Achsen zu erlauben, die quer zu der Werkzeugachse verlaufen. Hierzu sind die beiden Kupplungskomponenten derart ausgebildet, dass sie sich schräg zueinander ausrichten lassen, d.h. relativ zueinander taumeln, und hierdurch einen variablen und ungleichmäßigen Zwischenraum zueinander einschließen. Dies könnte durch eine Anordnung von Federelementen erreicht werden, die zwischen zueinander gewandten Flächen der beiden Kupplungskomponenten angeordnet sind und eine zu den Flächen quer wirkende Federwirkung aufweisen. Der Freiheitsgrad für eine Bewegung der Werkzeugeinheit wird dadurch weiter vergrößert.

In einer vorteilhaften Ausführungsform werden die Kupplungskomponenten federelastisch in eine Neutrallage gedrängt. Eine vibrationsinduzierte Pendelbewegung wird sich im unbelasteten Zustand der Werkzeugeinheit um die Neutrallage herum ergeben. Wird die Werkzeugeinheit bei einem Vorschub auf das Bauelement temporär verklemmt, wird die Verklemmung unmittelbar bei einer ausreichenden Ausweichbewegung der Werkzeugeinheit wieder gelöst. Die Werkzeugeinheit wird anschließend wieder in Richtung der Neutrallage gedrängt.

In einer vorteilhaften Ausführungsform ist das längliche Bauelement ein Niet, wobei die Werkzeugeinheit ein Nietwerkzeug aufweist, das dazu ausgebildet ist, einen auf das längliche Bauelement aufgeschobenen Schließring mit dem Bauelement zu verquetschen. Der Schließring kann vor dem Auffädeln der Werkzeugeinheit manuell auf den Niet aufgeschoben werden. Es ist auch denkbar, dass die Werkzeugeinheit dazu ausgebildet ist, den Schließring beim Auffädeln aufzuschieben. Zum Installieren des Schließrings an dem Niet greift die auf den Niet aufgesetzte Werkzeugeinheit den Niet und stützt sich dabei auf dem Schließring ab. Durch das Anziehen eines an dem Niet vorgesehenen Zugteils werden der Schließring und der Niet zusammengequetscht, wobei der Schließring in hierfür vorgesehene Schließrillen des Niets eingeformt wird. Dieser Vorgang ist dann abgeschlossen, wenn das Nietwerkzeug auf der den Niet umgebenden Oberfläche der zu fügenden Teile trifft, wobei durch eine ansteigende Zugspannung im Niet dieser an einer oberhalb des Schließrings zu der Werkzeugeinheit gewandten Sollbruchstelle bricht.

In einer vorteilhaften Ausführungsform ist die Vorrichtung dazu ausgebildet, die Vibrationseinheit während des Vorschubs zu betreiben und beim Erreichen einer vorgesehenen Endposition des ersten Bauelements die Vibrationseinheit auszuschalten. Damit kann sichergestellt werden, dass die Werkzeugeinheit stets während des Vorschubs durch die Vibrationseinheit mit einer Querkraft beaufschlagt wird, um einem Verklemmen oder Verkanten entgegenzuwirken.

In einer vorteilhaften Ausführungsform weist die Vorrichtung ferner eine Vorschubeinheit auf, wobei die Vorschubeinheit mit der Halteanordnung verbunden ist. Die Vorschubeinheit ist insbesondere eine Linearvorschubeinheit, die eine Führungsvorrichtung und eine Antriebsvorrichtung umfassen kann. Die Antriebsvorrichtung kann hydraulisch, pneumatisch oder elektrisch sein. Eine pneumatische Antriebsvorrichtung könnte sich dann anbieten, wenn die Werkzeugeinheit und/oder die Vibrationseinheit ebenso pneumatisch arbeiten.

In einer vorteilhaften Ausführungsform sind die Vorschubeinheit und die Vibrationseinheit steuernd miteinander verbunden, sodass die Vibrationseinheit beim Betreiben der Vorschubeinheit betrieben wird. Damit wird sichergestellt, dass die Vibrationseinheit genau dann betrieben wird, wenn die Gefahr eines Klemmens oder Verkantens besteht.

In einer vorteilhaften Ausführungsform ist die elastische Kupplungseinheit dazu ausgebildet, arretiert zu werden, sodass eine Bewegbarkeit zwischen der ersten Kupplungskomponente und der zweiten Kupplungskomponente während des Verquetschens vermieden wird. Die elastische Kupplungseinheit könnte etwa eine pneumatische Arretiereinrichtung aufweisen, die beide Kupplungskomponenten miteinander fixiert, sodass ihre momentan eingestellte Position gehalten wird. Während des Verquetschens kann folglich eine gleichbleibende Ausrichtung der Werkzeugeinheit beibehalten werden, was den Vorgang des Verquetschens unterstützt und verhindert, dass beim Ziehen des Bauelements ein unerwünschtes Auslenken der Werkzeugeinheit erfolgt.

Die Erfindung betrifft ferner ein Verfahren zum Auffädeln einer Werkzeugeinheit auf ein längliches Bauelement, aufweisend Haltern der Werkzeugeinheit mittels einer elastischen Kupplungseinheit mit einer ersten Kupplungskomponente und einer zweiten Kupplungskomponente, die elastisch aneinander gehalten werden, an einer Halteanordnung, Führen und Verschieben der Halteanordnung in Richtung des länglichen Bauelements mittels einer Vorschubeinrichtung, und beim Verschieben Betreiben einer mit der Werkzeugeinheit verbundenen Vibrationseinheit, die dazu ausgebildet ist, eine periodische Kraft in zumindest einer zu einer Werkzeugachse quer verlaufenden ersten Raumrichtung zu generieren, sodass während des Verschiebens einer auf die Werkzeugeinheit wirkenden Vorschubkraft ein zusätzlicher, sich periodisch ändernder Queranteil hinzugefügt wird, durch den einem Verkanten der Werkzeugeinheit an dem länglichen Bauelement entgegengewirkt wird.

In einer vorteilhaften Ausführungsform ist das längliche Bauelement ein Niet, und die Werkzeugeinheit ist ein Nietwerkzeug, das Verfahren ferner aufweisend Verquetschen eines Schließrings, der auf das längliche Bauelement aufgeschoben ist, mittels der Werkzeugeinheit.

In einer vorteilhaften Ausführungsform wird die Vibrationseinheit während des Vorschubs betrieben und beim Erreichen einer vorgesehenen Endposition des länglichen Bauelements wird die Vibrationseinheit ausgeschaltet.

In einer vorteilhaften Ausführungsform sind die Vorschubeinheit und die Vibrationseinheit steuernd miteinander verbunden, das Verfahren aufweisend Betreiben der Vibrationseinheit beim Betreiben der Vorschubeinheit.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Vorrichtung gemäß einem Ausführungsbeispiel.
- Fig. 2: eine schematische Darstellung eines Verfahrens gemäß einem Ausführungsbeispiel.

### Detaillierte Beschreibung von Ausführungsbeispielen

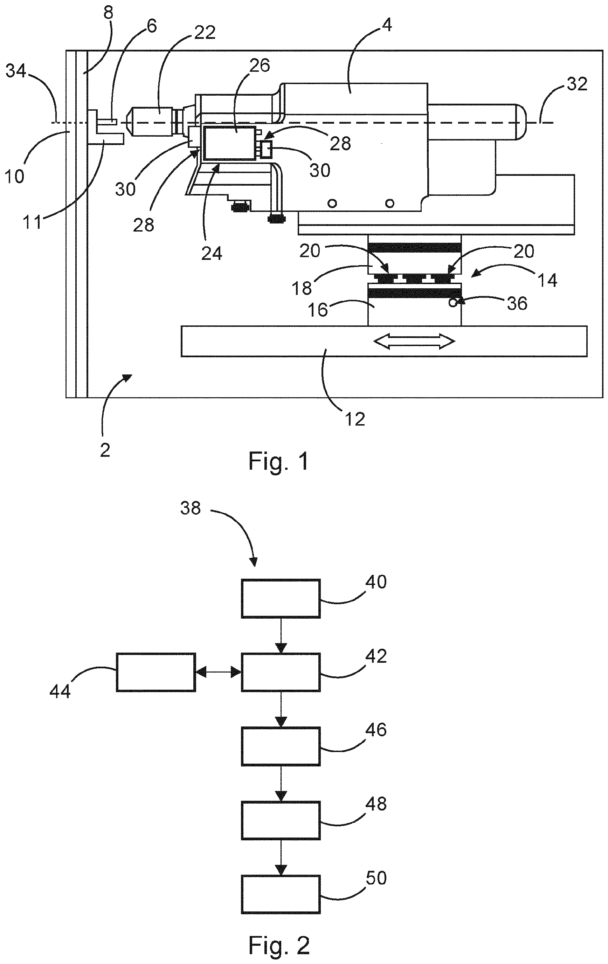

Fig. 1 zeigt eine Vorrichtung 2 zum Auffädeln einer Werkzeugeinheit 4 auf ein längliches Bauelement 6. Hier ist das längliche Bauelement 6 ein Niet, der in einer gemeinsamen Öffnung dreier miteinander zu verbindender Bauteile 8, 10 und 11 steckt und von einem der Bauteile 11 absteht. Die Bauteile 8 und 10 könnten etwa Schalenelemente für einen Rumpf eines Luftfahrzeugs sein. Das Bauteil 11 könnte ein Stringer sein, der bündig an dem Schalenelement 8 anliegt und zur Versteifung des Rumpfs in Längsrichtung dient. Eine Halteanordnung 12 ist vorgesehen, an der die Werkzeugeinheit 4 über eine elastische Kupplungseinheit 14 befestigt ist. Die elastische Kupplungseinheit 14 weist eine erste Kupplungskomponente 16 und eine zweite Kupplungskomponente 18 auf. Die erste Kupplungskomponente 16 ist hier beispielhaft mit der Halteanordnung 12 verbunden, während die zweite Kupplungskomponente 18 mit der Werkzeugeinheit 4 verbunden ist. Beide Kupplungskomponenten 16 und 18 sind über Federelemente 20 elastisch miteinander gekoppelt, sodass sich ihre relative Ausrichtung zueinander ändern kann. In der gezeigten Darstellung sind die beiden Kupplungskomponenten 16 und 18 in einer Neutrallage, in der beide Kupplungskomponenten 16 und 18 parallel zueinander ausgerichtet sind.

Die Werkzeugeinheit 4 weist eine Werkzeugachse 32 auf. Diese liegt beispielhaft parallel zu zueinander gewandten Flächen der beiden Kupplungskomponenten 16 und 18. Eine geeignete Ausführung einer elastischen Kupplungseinheit 14 ist etwa eine Ausgleichseinheit, in der zwei oftmals zylindrische Kupplungskomponenten mit dazwischenliegenden, oftmals einstellbaren Federelementen elastisch miteinander verbunden sind.

Die Werkzeugeinheit 4 kann durch Verschieben der Halteanordnung 12 mit einem Bearbeitungskopf 22 auf das Bauelement 6 aufgeschoben bzw. aufgefädelt werden. Zum Verbessern des Auffädelns ist eine Vibrationseinheit 24 vorgesehen, die an der Werkzeugeinheit 4 angebracht ist. Sie weist beispielhaft einen Elektromotor 26 auf, an dessen Wellenenden 28 jeweils eine exzentrische Masse 30 angeordnet ist. Wird der Elektromotor 26 betrieben, wird periodisch eine quer zu einer Werkzeugachse 32 ausgerichtete Querkraft generiert, durch die die Werkzeugeinheit 4 aufgrund der elastischen Kupplungseinheit 14 leicht pendelt. Die Stärke der Pendelbewegung ist dabei von der Größe der exzentrischen Massen 30 abhängig sowie von der Drehzahl des Elektromotors 26.

Befindet sich der Bearbeitungskopf 22 auf dem Bauelement 6, kann durch kontinuierliches Vibrieren ein Verkanten zwischen dem Bauelement 6 und dem Bearbeitungskopf 22 beim Vorschieben der Werkzeugeinheit 4 verhindert werden. Eine präzise Ausrichtung der Werkzeugachse 32 mit einer Erstreckungsachse 34 des Bauelements 6 ist nicht notwendig, da sich die relative Ausrichtung des Bearbeitungskopfs 22 und des Bauelements 6 stetig ändert und ein Verkanten damit verhindert wird.

Ist die Werkzeugeinheit 4 vollständig auf das Bauelement 6 aufgefädelt, kann die Vibrationseinheit 24 abgestellt werden und die Werkzeugeinheit 4 könnte einen Bearbeitungsvorgang durchführen. Bei diesem könnte etwa ein Schließring, der auf dem Bauelement 6 aufgeschoben ist oder durch die Werkzeugeinheit 4 selbst aufgeschoben wurde, mit dem Bauelement 6 verquetscht werden. Dieses ist beispielhaft als ein Niet ausgeführt.

Es ist weiterhin denkbar, dass die elastische Kupplungseinheit 14 einen Anschluss 36 aufweist, der mit einer Pressluftleitung verbindbar ist. Das Einleiten von Pressluft kann ein Arretieren der elastischen Kupplungseinheit 14 in einer momentanen Position durchführen, sodass bei dem Vorgang des Verquetschens eine sichere Abstützung der Werkzeugeinheit 4 an der Halteanordnung 12 erfolgt.

Fig. 2 zeigt schematisch ein Verfahren 38 zum Auffädeln der Werkzeugeinheit 4 auf das längliche Bauelement 6, aufweisend die Schritte des Halterns 40 der Werkzeugeinheit 4 mittels der elastischen Kupplungseinheit 14 mit einer ersten Kupplungskomponente 16 und einer zweiten Kupplungskomponente 18, die elastisch aneinander gehalten werden, an der Halteanordnung 12. Die Halteanordnung 12 wird mittels der Vorschubeinrichtung in Richtung des länglichen Bauelements 6 geführt und verschoben 42. Beim Verschieben 42 wird die mit der Werkzeugeinheit 4 verbundene Vibrationseinheit 24 betrieben 44, um eine periodische Kraft in zumindest einer zu einer Werkzeugachse 32 quer verlaufende ersten Raumrichtung zu generieren. Während des Verschiebens 42 wird folglich einer auf die Werkzeugeinheit 4 wirkenden Vorschubkraft ein zusätzlicher, sich periodisch ändernder Queranteil hinzugefügt, durch den einem Verkanten der Werkzeugeinheit 4 an dem länglichen Bauelement 6 entgegengewirkt wird. Nach dem Auffädeln kann die elastische Kupplungseinheit 14 arretiert werden 46. Die Vibrationseinheit 24 wird dann abgeschaltet 48. Anschließend kann die Werkzeugeinheit 4 einen Bearbeitungsvorgang ausführen 50, beispielsweise das Verquetschen eines Schließrings an dem länglichen Bauelement 6.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Vorrichtung
- 4: Werkzeugeinheit
- 6: längliches Bauelement
- 8: Bauteil / Schalenelement
- 10: Bauteil / Schalenelement
- 11: Bauteil / Stringer
- 12: Halteanordnung
- 14: elastische Kupplungseinheit
- 16: erste Kupplungskomponente
- 18: zweite Kupplungskomponente
- 20: Federelement
- 22: Bearbeitungskopf
- 24: Vibrationseinheit
- 26: Elektromotor
- 28: Wellenende
- 30: exzentrische Masse
- 32: Werkzeugachse
- 34: Erstreckungsachse
- 36: Anschluss
- 38: Verfahren
- 40: Haltern
- 42: Führen und Verschieben
- 44: Betreiben Vibrationseinheit
- 46: Arretieren elastischer Kupplungseinheit
- 48: Abschalten Vibrationseinheit
- 50: Ausführen Bearbeitungsvorgang

## Patentansprüche

1. Vorrichtung (2) zum Auffädeln einer Werkzeugeinheit (4) auf ein längliches Bauelement, die Vorrichtung (2) aufweisend:
eine Halteanordnung (12) zum Haltern der Vorrichtung (2) an einer Vorschubeinrichtung,
eine Werkzeugeinheit (4), die auf das längliche Bauelement (6) aufzufädeln ist und eine Werkzeugachse (32) aufweist,
eine mit der Werkzeugeinheit (4) verbundene Vibrationseinheit (24), die dazu ausgebildet ist, eine periodische Kraft in zumindest einer zu der Werkzeugachse (32) quer verlaufenden ersten Raumrichtung zu generieren, und
eine elastische Kupplungseinheit (14) mit einer ersten Kupplungskomponente (16) und einer zweiten Kupplungskomponente (18), die elastisch aneinander gehalten werden,
wobei die erste Kupplungskomponente (16) mit der Halteanordnung (12) verbunden ist,
wobei die zweite Kupplungskomponente (18) mit der Werkzeugeinheit (4) verbunden ist, und
wobei die Vorrichtung (2) dazu ausgebildet ist, durch Betreiben der Vibrationseinheit (24) während eines Vorschubs der Halteanordnung (12) zum Auffädeln der Werkzeugeinheit (4) auf das längliche Bauelement (6) einer auf die Werkzeugeinheit (4) wirkenden Vorschubkraft einen zusätzlichen, sich periodisch ändernden Queranteil hinzuzufügen, durch den einem Verkanten der Werkzeugeinheit (4) an dem länglichen Bauelement (6) entgegengewirkt wird.

2. Vorrichtung (2) nach Anspruch 1,
wobei die Vibrationseinheit (24) einen Elektromotor (26) mit einer exzentrischen Masse (30) aufweist.

3. Vorrichtung (2) nach Anspruch 1 oder 2,
wobei die die elastische Kupplungseinheit (14) dazu ausgebildet ist, einen Versatz der beiden Kupplungskomponenten (16, 18) zumindest in einer Ebene durchzuführen.

4. Vorrichtung (2) nach einem der vorhergehenden Ansprüche,
wobei die elastische Kupplungseinheit (14) dazu ausgebildet ist, die beiden Kupplungskomponenten (16, 18) gegeneinander zu verdrehen.

5. Vorrichtung (2) nach einem der vorhergehenden Ansprüche,
wobei die Kupplungskomponenten (16, 18) federelastisch in eine Neutrallage gedrängt werden.

6. Vorrichtung (2) nach einem der vorhergehenden Ansprüche,
wobei das längliche Bauelement (6) ein Niet ist, und
wobei die Werkzeugeinheit (4) ein Nietwerkzeug aufweist, das dazu ausgebildet ist, einen auf das längliche Bauelement (6) aufgeschobenen Schließring mit dem Bauelement (6) zu verquetschen.

7. Vorrichtung (2) nach einem der vorhergehenden Ansprüche,
wobei die Vorrichtung (2) dazu ausgebildet ist, die Vibrationseinheit (24) während des Vorschubs zu betreiben und beim Erreichen einer vorgesehenen Endposition des länglichen Bauelements (6) die Vibrationseinheit (24) auszuschalten.

8. Vorrichtung (2) nach einem der vorhergehenden Ansprüche,
ferner aufweisend eine Vorschubeinheit, wobei die Vorschubeinheit mit der Halteanordnung (12) verbunden ist.

9. Vorrichtung (2) nach Anspruch 7 und 8,
wobei die Vorschubeinheit und die Vibrationseinheit (24) steuernd miteinander verbunden sind, sodass die Vibrationseinheit (24) beim Betreiben der Vorschubeinheit betrieben wird.

10. Vorrichtung (2) nach Anspruch 6,
wobei die elastische Kupplungseinheit (14) dazu ausgebildet ist, arretiert zu werden, sodass eine Bewegbarkeit zwischen der ersten Kupplungskomponente (16) und der zweiten Kupplungskomponente (18) während des Verquetschens vermieden wird.

11. Verfahren (38) zum Auffädeln einer Werkzeugeinheit (4) auf ein längliches Bauelement (6), aufweisend:
Haltern (40) der Werkzeugeinheit (4) mittels einer elastischen Kupplungseinheit (14) mit einer ersten Kupplungskomponente (16) und einer zweiten Kupplungskomponente (18), die elastisch aneinander gehalten werden, an einer Halteanordnung (12),
Führen und Verschieben (42) der Halteanordnung in Richtung des länglichen Bauelements (6) mittels einer Vorschubeinrichtung, und
beim Verschieben (42) Betreiben (44) einer mit der Werkzeugeinheit (4) verbundenen Vibrationseinheit (24), die dazu ausgebildet ist, eine periodische Kraft in zumindest einer zu einer Werkzeugachse (32) quer verlaufenden ersten Raumrichtung zu generieren, sodass während des Verschiebens (42) einer auf die Werkzeugeinheit (4) wirkenden Vorschubkraft ein zusätzlicher, sich periodisch ändernder Queranteil hinzugefügt wird, durch den einem Verkanten der Werkzeugeinheit (4) an dem länglichen Bauelement (6) entgegengewirkt wird.

12. Verfahren (38) nach Anspruch 11,
wobei das längliche Bauelement (6) ein Niet ist, und
wobei die Werkzeugeinheit (4) ein Nietwerkzeug aufweist,
das Verfahren (38) ferner aufweisend: Verquetschen eines Schließrings, der auf das längliche Bauelement (6) aufgeschoben ist, mittels der Werkzeugeinheit (4).

13. Verfahren (38) nach Anspruch 11 oder 12,
wobei die Vibrationseinheit (24) während des Verschiebens (42) betrieben wird und beim Erreichen einer vorgesehenen Endposition des länglichen Bauelements (6) die Vibrationseinheit (24) ausgeschaltet wird.

14. Verfahren (38) nach einem der Ansprüche 11 bis 13,
wobei die Vorschubeinheit und die Vibrationseinheit (24) steuernd miteinander verbunden sind,
das Verfahren (38) aufweisend Betreiben der Vibrationseinheit (24) beim Betreiben der Vorschubeinheit.
